# EUROPÄISCHE PATENTSCHRIFT

(11) **EP 1 851 288 B1**
(45) Veröffentlichungstag und Bekanntmachung des Hinweises auf die Patenterteilung: **29.10.2008**
(21) Anmeldenummer: 06707971.5
(22) Anmeldetag: 02.02.2006
(51) Int. Cl.: C10G 33/04, B01D 17/04, C08G 83/00, C08G 63/20, C08G 63/91, C08G 64/02, C08G 64/42

(54) **HOCHVERZWEIGTE POLYCARBONATE ALS DEMULGATOREN ZUM SPALTEN VON ROHÖLEMULSIONEN**
HYPERBRANCHED POLYCARBONATES FOR USE AS DEMULSIFIERS FOR CRACKING CRUDE OIL EMULSIONS
POLYCARBONATES HAUTEMENT RAMIFIES UTILISES COMME DES EMULSIFIANTS POUR SEPARER DES EMULSIONS D'HUILE BRUTE

(30) Priorität: 09.02.2005 DE 102005006030
(43) Veröffentlichungstag der Anmeldung: 07.11.2007
(60) Teilanmeldung: 08154760.6
(73) Patentinhaber: BASF SE, 67056 Ludwigshafen (DE)
(72) Erfinder: BRUCHMANN, Bernd, 67251 Freinsheim (DE); BÜCHNER, Karl-heinz, 68804 Altlussheim (DE); GUZMANN, Marcus, 69242 Mühlhausen (DE); BRODT, Gregor, 64646 Heppenheim (DE); FRENZEL, Stefan, 68161 Mannheim (DE)
(74) Vertreter: Isenbruck, Günter
(86) Internationale Anmeldenummer: PCT/EP2006/050610
(87) Internationale Veröffentlichungsnummer: WO 2006/084816

(56) Entgegenhaltungen:
- EP-A- 0 264 710
- EP-A- 0 267 517
- EP-A- 0 473 088
- FR-A- 2 503 170
- US-A- 4 457 860
- US-A- 4 885 111
- US-A- 5 234 626
- US-A- 5 460 750
- US-B1- 6 315 908

## Beschreibung

Die Erfindung betrifft die Verwendung von hyperverzweigten Polymeren als Demulgatoren zum Spalten von Rohölemulsionen.

Erdöl fällt in der Regel als relativ stabile Wasser-in-Öl-Emulsion an. Diese kann je nach Alter und Lagerstätte bis zu 90 Gew.% Wasser enthalten. Rohölemulsionen unterscheiden sich in ihrer Zusammensetzung von Lagerstätte zu Lagerstätte. Neben Wasser enthält die Rohölemulsion im Allgemeinen noch 0,1 bis 25 Gew.% Salze und Feststoffe. Wasser, Salze und Feststoffe müssen entfernt werden, bevor die Rohölemulsion transportiert und als Rohöl in der Raffinerie verarbeitet werden kann. Das Rohöl selbst ist eine heterogene Mischung und enthält vor allem natürliche Emulgatoren, wie Naphthensäuren, heterozyklische Stickstoffverbindungen und oxidierte Kohlenwasserstoffe, des weiteren Erdölkolloide, wie Asphaltene und Harze, anorganische Salze, wie Eisensulfide, Eisenoxide, Tone und Erze, Natriumchlorid und Kaliumchlorid.

Die Rohölemulsionsspaltung wird aus ökonomischen und technischen Gründen durchgeführt, um einerseits den unwirtschaftlichen Transport von Wasser zu vermeiden, Korrosionsprobleme zu verhindern oder zumindest zu minimieren, und um den Energieeinsatz für die Transportpumpen zu reduzieren.

Die Spaltung der Rohölemulsion stellt somit einen wesentlichen Verfahrensschritt bei der Erdölförderung dar. Das im Rohöl enthaltene Wasser, das vor allem durch natürliche Emulgatoren wie Naphthensäuren emulgiert wird, bildet eine stabile Emulsion. Dies geschieht dadurch, dass die Emulgatoren die Grenzflächenspannung zwischen Wasser- und Ölphase herabsetzen und somit die Emulsion stabilisieren. Durch Zugabe von Emulsionsspaltern (Demulgatoren), d. h. grenzflächenaktiven Substanzen, die in die Öl-Wasser-Grenzfläche gehen und dort die natürlichen Emulgatoren verdrängen, kann eine Koaleszenz der emulgierten Wassertröpfchen bewirkt werden, was schließlich zur Phasentrennung führt.

EP-A 0 264 841 beschreibt die Verwendung von linearen Copolymeren aus hydrophoben Acrylsäure- oder Methacrylsäureestern und hydrophilen ethylenisch ungesättigten Monomeren als Erdölemulsionsspalter.

EP-A 0 499 068 beschreibt die Herstellung von Reaktionsprodukten aus vinylischen Monomeren und Alkohol- oder Phenolalkoxylaten und deren Verwendung als Demulgatoren für Rohölemulsionen.

US 5,460750 beschreibt Reaktionsprodukte aus Phenolharzen und Alkylenoxiden als Emulsionsspalter für Rohölemulsionen.

EP-A 0 541 018 beschreibt Emulsionsspalter, hergestellt aus Polyethyleniminen mit einem gewichtmittleren Molekulargewicht von bis zu 35 000 g/mol und Ethylenoxid und Propylenoxid, wobei als zweite wirksame Komponente zusätzlich ein Alkylphenolformaldehydharz eingesetzt wird.

EP-A 0 784 645 beschreibt die Herstellung von Alkoxylaten von Polyaminen, speziell von Polyethyleniminen und Polyvinylaminen, und deren Verwendung als Rohölemulsionsspalter.

EP-A 0 267 517 offenbart verzweigte Polyaminoester als Demulgatoren. Die verzweigten Polyaminoester werden durch Umsetzung von alkoxylierten primären Aminen mit Triolen und Dicarbonsäuren erhalten.

Weiterhin werden dendrimere Polymere als Demulgatoren für Rohöl beschrieben.

US 4,507,466 und US 4,857,599 offenbaren dendrimere Polyamidoamine. US 4,568,737 offenbart dendrimere Polyamidoamine sowie Hybrid-Dendrimere aus Polyamidoaminen, Polyestern und Polyethern, und deren Verwendung als Demulgatoren für Rohöl. Die Herstellung von Dendrimeren ist sehr aufwändig (siehe unten), daher sind diese Produkte sehr teuer und in großtechnischen Anwendungen kaum wirtschaftlich einsetzbar.

DE 103 29 723 beschreibt die Herstellung von alkoxylierten, dendrimeren Polyestern und deren Verwendung als bioabbaubare Emulsionsspalter. Die verwendeten dendrimeren Polyester basieren auf einem mehrfach funktionellen Alkohol als Kernmolekül und einer Carbonsäure, die wenigstens zwei Hydroxylgruppen aufweist, als Aufbaukomponente. Aufbaukomponenten, die sowohl eine Säurefunktion als auch mindestens zwei Hydroxylfunktionen aufweisen, sogenannte AB₂-Bausteine, sind vergleichsweise selten und damit teuer. Weiterhin ist der Aufbau von Dendrimeren aufwändig und kostenintensiv (siehe unten).

Aufgabe der vorliegenden Erfindung ist es, weitere Demulgatoren zur Spaltung von Rohölemulsionen bereit zu stellen. Diese sollten einfach und kostengünstig herzustellen sein.

Gelöst wird die Aufgabe durch die Verwendung von nicht-dendrimeren, hochfunktionellen, hyperverzweigten Polycarbonaten gemäß Anspruch 1 als Demulgatoren zum Spalten von Rohölemulsionen.

Dendrimere, Arborole, Starburst-Polymere oder hyperverzweigte Polymere sind Bezeichnungen für Polymere, die sich durch eine stark verzweigte Struktur und eine hohe Funktionalität auszeichnen. Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder mehrfach funktionellen Monomeren mit jedem bereits gebundenen Monomer herstellen. Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Die speziellen Reaktionsbedingungen, die erforderlich sind, um Dendrimere herzustellen, seien nachfolgend am Beispiel der Herstellung von dendrimeren Polyurethanen erläutert. Um bei der Herstellung der dendrimeren Polyurethane genau definierte Strukturen zu erhalten, ist es notwendig, jeweils mindestens so viele Monomere zuzusetzen, dass jede freie funktionelle Gruppe des Polymeren abreagieren kann. Zu Beginn der Reaktion wird zumeist ein mehrfach funktionelles Molekül, das als Startmolekül oder Initiatorkern bezeichnet wird, vorgelegt, an dessen funktionelle Gruppen je ein mit dieser funktionellen Gruppe reaktives Molekül angelagert wird. Danach erfolgt die Abtrennung der nicht umgesetzten Monomere und eine Reinigung des Zwischenproduktes. Danach wird an jede freie funktionelle Gruppe des Zwischenproduktes wiederum je ein mehrfach funktionelles Monomer angelagert, danach die Abtrennung der überschüssigen Monomeren und eine Reinigung durchgeführt, und so weiter verfahren, bis das gewünschte Molekulargewicht erreicht ist bzw. aus sterischen Gründen eine Anlagerung von weiteren Monomeren nicht mehr möglich ist. Die einzelnen Zwischenstufen werden auch als Generationen bezeichnet, wobei das durch Anlagerung von Monomeren an das Startmolekül entstandene Zwischenprodukt als erste Generation, das nächste Zwischenprodukt als zweite Generation, und so fort, bezeichnet wird. Auf Grund der unterschiedlichen Reaktivität der funktionellen Gruppen der eingesetzten Monomere ist gewährleistet, dass jeweils die reaktivsten funktionellen Gruppen mit den Endgruppen der Dendrimerketten reagieren und die weniger reaktiven funktionellen Gruppen der Monomere die funktionellen Endgruppen der nächsten Generation der dendrimeren Polyurethane bilden.

So kann die Herstellung der dendrimeren Polyurethane erfolgen, indem man 1. Mol eines Diisocyanates mit zwei Mol eines Aminodiols zur ersten Generation des dendrimeren Polyurethans umsetzt. Die Temperatur bei der Umsetzung sollte dabei möglichst niedrig, vorzugsweise im Bereich zwischen -10 bis 30 °C, liegen. In diesem Temperaturbereich erfolgt eine praktisch vollständige Unterdrückung der Urethanbildungsreaktion, und die NCO-Gruppen des Isocyanates reagieren ausschließlich mit der Aminogruppe des Aminodiols, im nächsten Reaktionsschritt reagieren die freien Hydroxylgruppen des addierten Aminodiols bei erhöhter Temperatur, vorzugsweise im Bereich zwischen 30 und 80 °C, selektiv mit der reaktiveren NCO-Gruppe des zugesetzten Isocyanats. Das resultierende dendrimere Polyurethan der zweiten Generation besitzt als funktionelle Endgruppen die reaktionsträgeren NCO-Gruppen des zugesetzten Isocyanats. Diese werden wiederum, wie bei der Herstellung der ersten Generation des dendrimeren Polyurethans, bei niedriger Temperatur mit dem Aminodiol umgesetzt, und so fort. Die Umsetzung kann in Substanz oder in Lösungsmitteln ohne oder in Anwesenheit eines Urethanbildungskatalysators durchgeführt werden. Zwischen den Reaktionsstufen kann, soweit erforderlich, eine Abtrennung überschüssiger Monomere und/oder ein Reinigungsschritt erfolgen.

Auf diese Weise können dendrimere Polyurethane erzeugt werden, die bei jeder Generation ihre Funktionalität verdoppeln.

In analoger Weise können auch drei- und höherfunktionelle Isocyanate und Verbindungen mit vier oder mehr mit Isocyanaten reaktiven funktionellen Gruppen umgesetzt werden.

Der beschriebene generationenweise Aufbau ist erforderlich, um vollständig regelmäßig aufgebaute, dendrimere Strukturen zu erzeugen.

Im Gegensatz dazu sind hyperverzweigte Polymere sowohl molekular wie strukturell uneinheitlich. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf. Zur Synthese der hyperverzweigten Polymere eignen sich insbesondere so genannte ABₓ-Monomere. Diese weisen zwei verschiedene funktionelle Gruppen A und B in einem Molekül auf, die unter Bildung einer Verknüpfung intermolekular miteinander reagieren können. Die funktionelle Gruppe A ist dabei nur einmal pro Molekül enthalten und die funktionelle Gruppe B zweifach oder mehrfach. Durch die Reaktion der besagten ABₓ-Monomere miteinander entstehen unvernetzte Polymere mit regelmäßig angeordneten Verzweigungstellen. Die Polymere weisen an den Kettenenden fast ausschließlich B-Gruppen auf.

Weiterhin lassen sich hyperverzweigte Polymere über die Aₓ + B_{y} - Syntheseroute herstellen. Darin stehen Aₓ und B_{y} für zwei unterschiedliche Monomere mit den funktionellen Gruppen A und B und die Indices x und y für die Anzahl der funktionellen Gruppen pro Monomer. Bei der Aₓ + B_{y}-Synthese, dargestellt hier am Beispiel einer A₂ + B₃-Synthese, setzt man ein difunktionelles Monomer A₂ mit einem trifunktionellen Monomer B₃ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann. Auch die so erhaltenen hyperverzweigten Polymere weisen überwiegend B-Gruppen als Endgruppen auf.

Das Merkmal "hyperverzweigt" im Zusammenhang mit den Polymeren bedeutet im Sinne der Erfindung, dass der Verzweigungsgrad DB (degree of branching) der betreffenden Stoffe, der definiert ist als 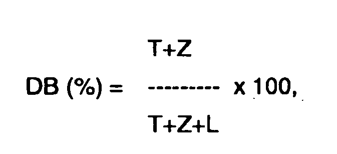 wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, 10 bis 95 %, bevorzugt 25 - 90 % und besonders bevorzugt 30 bis 80 % beträgt.

Durch den so definierten Verzweigungsgrad unterscheiden sich die erfindungsgemäß verwendeten nicht-dendrimeren hyperverzweigten Polymere von den dendrimeren Polymeren. "Dendrimer" sind im Zusammenhang mit der vorliegenden Erfindung die Polymere dann, wenn ihr Verzweigungsgrad DB = 99,9 - 100 % beträgt. Damit weist ein Dendrimer die maximal mögliche Anzahl an Verzweigungsstellen auf, welche nur durch einen hochsymmetrischen Aufbau erreicht werden kann. Zur Definition des "Degree of Branching" siehe auch H. Frey et al., Acta Polym. 1997, 48, 30.

Unter hyperverzweigten Polymeren werden im Rahmen dieser Erfindung im Wesentlichen unvernetzte Makromoleküle verstanden, die sowohl strukturell als auch molekular uneinheitlich sind. Sie können, ausgehend von einem Zentralmolekül, analog zu Dendrimeren, jedoch mit uneinheitlicher Kettenlänge der Äste aufgebaut sein. Sie können aber auch linear mit funktionellen seitenständigen Ästen aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14,2499.

Erfindungsgemäß werden hyperverzweigte Polycarbonate, also nicht-dendrimere Polycarbonate im Sinne der obigen Definition, d.h. molekular und strukturell uneinheitlichen Polymeren als Demulgatoren verwendet, die erhältlich sind durch
a) Umsetzung mindestens eines organischen Carbonats (A) der allgemeinen Formel RO(CO)OR mit mindestens einem aliphatischen Alkohol (B), welcher mindestens drei OH-Gruppen aufweist, ausgewählt aus tri- oder höherfunktionellen Polyetherolen auf Basis tri- oder höherfunktioneller Alkohole und Ethylenoxid, Propylenoxid oder Butylenoxid, gegebenenfalls in Mischung mit einem oder mehreren difunktionellen Alkoholen (B') mit der Maßgabe, dass die mittlere OH-Funktionalität aller eingesetzten Alkohole zusammen > 2 ist, unter Eliminierung von Alkoholen ROH zu einem oder mehreren Kondensationsprodukten (K), wobei es sich bei R jeweils unabhängig voneinander um einen geradkettigen oder verzweigten aliphatischen, araliphatischen oder aromatischen Kohlenwasserstoffrest mit 1 bis 20 C-Atomen handelt, und
b) intermolekulare Umsetzung der Kondensationsprodukte (K) zu einem hochfunktionellen, hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Funktionelle Gruppen aufweisende hyperverzweigte Polymere können in prinzipiell bekannter Art und Weise unter Verwendung von ABₓ-, bevorzugt AB₂- oder AB₃-Monomeren synthetisiert werden. Die ABₓ-Monomere können dabei einerseits vollständig in Form von Verzweigungen in das hyperverzweigte Polymer eingebaut werden, sie können als terminale Gruppen eingebaut werden, also noch x freie B-Gruppen aufweisen, und sie können als lineare Gruppen mit (x-1) freien B-Gruppen eingebaut sein. Die erhaltenen hyperverzweigten Polymere weisen je nach dem Polymerisationsgrad eine mehr oder weniger große Anzahl von B-Gruppen, entweder terminal oder als Seitengruppen auf. Weitere Angaben zu hyperverzweigten Polymeren und deren Synthese sind beispielsweise in J.M.S. - Rev. Macromol. Chem. Phys., C37(3), 555 - 579 (1997) und der dort zitierten Literatur zu finden.

Hyperverzweigte Polymere lassen sich beispielsweise wie folgt herstellen:
- hyperverzweigte Polycarbonate nach der nicht-vorveröffentlichten Patentanmeldung DE 10342523.3

### Hyperverzweigte Polycarbonate

Als Demulgatoren geeignete hyperverzweigte Polycarbonaten können hergestellt werden durch
a) Umsetzung mindestens eines organischen Carbonats (A) der allgemeinen Formel RO(CO)OR mit mindestens einem aliphatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, araliphatischen oder aromatischen Kohlenwasserstoffrest mit 1 bis 20 C-Atomen handelt, sowie
b) intermolekulare Umsetzung der Kondensationsprodukte (K) zu einem hochfunktionellen, hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Bei den Resten R der als Ausgangsmaterial eingesetzten organischen Carbonate (A) der allgemeinen Formel RO(CO)OR handelt es sich jeweils unabhängig voneinander um einen geradkettigen oder verzweigten aliphatischen, araliphatischen oder aromatischen Kohlenwasserstoffrest mit 1 bis 20 C-Atomen. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Geeignete Verbindungen mit mindestens drei OH-Gruppen sind tri- oder höherfunktionelle Polyetherole auf Basis tri- oder höherfunktioneller Alkohole und Ethylenoxid, Propylenoxid oder Butylenoxid. Dabei sind Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, difunktionelle Polyether- oder Polyesterole.

Die Reaktion des Carbonats mit dem Alkohol oder Alkoholgemisch zum erfindungsgemäßen verwendeten hochfunktionellen hyperverzweigten Polycarbonat erfolgt unter Eliminierung des monofunktionellen Alkohols oder Phenols aus dem Carbonat-Molekül.

Die nach dem geschilderten Verfahren gebildeten hochfunktionellen hyperverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens vier, bevorzugt mindestens acht funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100, insbesondere nicht mehr als 30 end- oder seitenständige funktionelle Gruppen auf.

Bei der Herstellung der hochfunktionellen Polycarbonate ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (A) und einem Di- oder Polyalkohol (B) ergibt dabei die Anordnung XYₙ oder YₙX, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

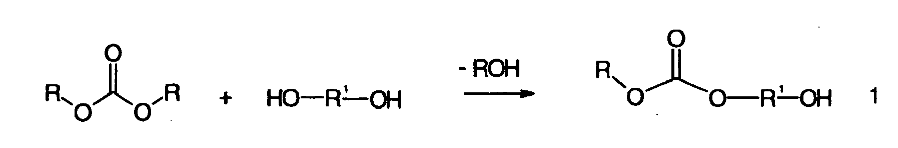

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂, veranschaulicht durch die allgemeine Formel 2. Fokale Gruppe ist hier eine Carbonatgruppe.

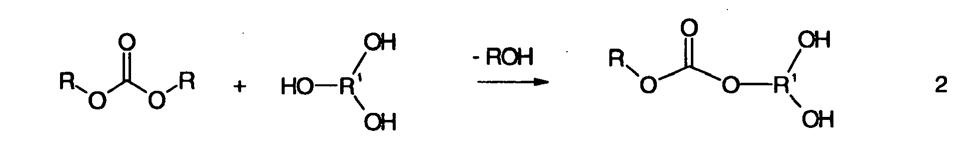

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃, veranschaulicht durch die allgemeine Formel 3. Fokale Gruppe ist hier eine Carbonatgruppe.

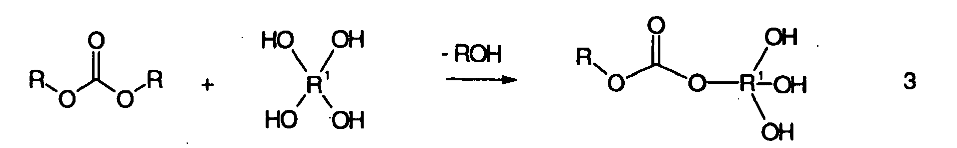

In den Formeln 1 bis 3 hat R die eingangs definierte Bedeutung und R¹ steht für einen aliphatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das molare Umsetzungsverhältnis bei 2:1 liegt. Hier resultiert im Mittel ein Molekül des Typs X₂Y, fokale Gruppe ist hier eine OH-Gruppe. In der Formel 4 haben R und R¹ die gleiche Bedeutung wie in den Formeln 1 bis 3.

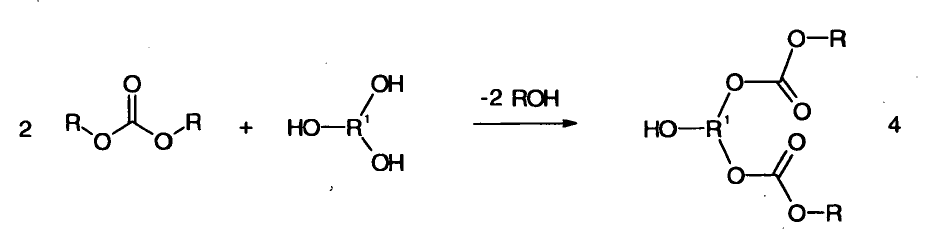

Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs XY₂, fokale Gruppe ist eine Carbonatgruppe.

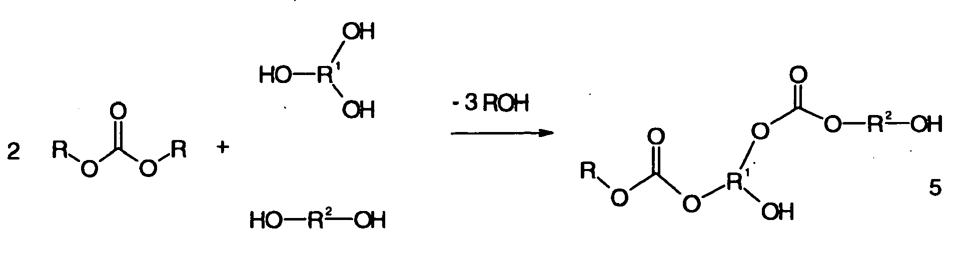

In Formel 5 bedeutet R² einen organischen, bevorzugt aliphatischen Rest, R und R¹ sind wie vorstehend beschrieben definiert.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titantetrabutylat, Titantetraisopropylat, Dibutylzinnoxid, Dibutylzinndilaurat, Zinndioctoat, Zirkonacetylacetonat oder Gemische davon eingesetzt.

Die Zugabe des Katalysators erfolgt im Allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.
Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

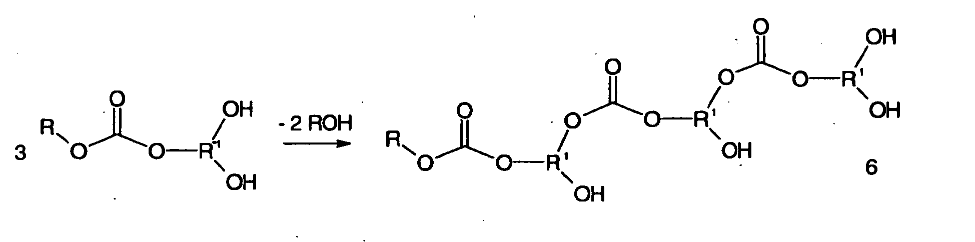

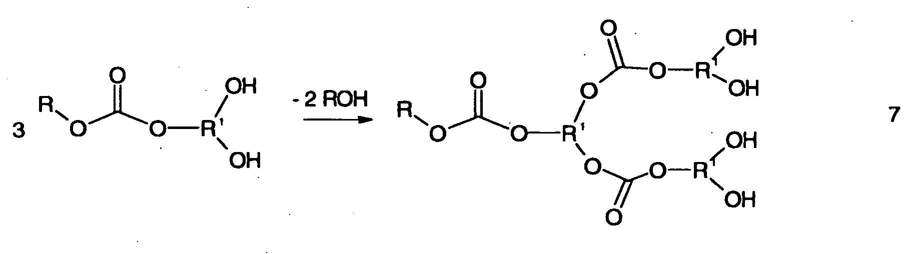

In Formel 6 und 7 sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die Produkte nach der Herstellung ohne weitere Reinigung weiterverarbeitet werden.

In einer weiteren bevorzugten Ausführungsform können die Polycarbonate neben den bereits durch die Reaktion erhaltenen funktionellen Gruppen weitere funktionelle Gruppen enthalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten, von den Carbonat- oder Hydroxylgruppen verschiedenen Funktionalitäten.

Derartige Effekte lassen sich zum Beispiel durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das erhaltene hochfunktionelle, hyperverzweigte Polycarbonat mit einem geeigneten Funktionalisierungsreagenz, welches mit den OH- und/oder Carbonat-Gruppen des Polycarbonates reagieren kann, umgesetzt wird.

Hydroxylgruppen enthaltende hochfunktionelle, hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Zur Spaltung der Rohölemulsionen werden die erfindungsgemäß verwendeten hyperverzweigten Polymere den Wasser-in-Öl- oder Öl-in-Wasser-Emulsionen vorzugsweise in gelöster Form zugesetzt. Dabei haben sich Polymerkonzentrationen in der Lösung von 10 - 90 Gew.-% bewährt. Als Lösemittel bevorzugt verwendet werden unter anderem Wasser, Alkohole wie Methanol, Ethanol, Propanol, Isopropanol, Butanol, Ether wie Tetrahydrofuran oder Dioxan, paraffinische Lösemittel wie Hexan, Cyclohexan, Heptan, Octan, Isooctan oder Leichtbenzinfraktionen, oder aromatische Lösemittel wie Toluol oder Xylol.

Bei der Emulsionsspaltung werden die Polymerlösungen dem Rohölen bevorzugt an den Sonden, das heißt im Ölfeld, zugesetzt. Die Spaltung verläuft bereits bei der Temperatur der frisch geförderten Rohölemulsion mit einer solchen Geschwindigkeit ab, dass die Emulsion bereits auf dem Weg zu der Aufbereitungsanlage gespalten werden kann. Diese gebrochene Emulsion wird dann in einem gegebenenfalls beheizten Abscheider und eventuell unter Zuhilfenahme eines elektrischen Feldes in Reinöl und Wasser beziehungsweise Salzwasser getrennt.

Die Konzentration des oder der erfindungsgemäß verwendeten Polymere, bezogen auf den Ölgehalt der Rohölemulsion, beträgt dabei im Allgemeinen 0,1 ppm bis 5 Gew.-%, vorzugsweise 1 ppm bis 3 Gew.-%, besonders bevorzugt 2 ppm bis 1 Gew.-% und speziell 5 ppm bis 0,5 Gew.-%.

Der Zusatz der Emulsionsspalter erfolgt dabei in der Regel bei 10 - 130°C, bevorzugt bei 40 - 90°C.

Die erfindungsgemäß verwendeten hyperverzweigten Polymere können für Wasser-in-Öl- oder Öl-in-Wasser-Emulsionen mit im Allgemeinen 0,1 bis 99 Gew.-% Wasser beziehungsweise Salzwasser verwendet werden. Als Öle, die auf diese Weise entwässert werden können, kommen Rohölemulsionen beliebiger Herkunft in Betracht.

Die erfindungsgemäßen Polymere können selbstverständlich auch im Mischung mit anderen Röhol-Demulgatoren eingesetzt werden.

Die Erfindung wird anhand der folgenden Beispiele näher erläutert.

### Beispiele

### Beispiele 1 -11

### Herstellung von hyperverzweigten Polycarbonaten

In einem Vierhalskolben, ausgestattet mit Rührer, Rückflusskühler, Gaseinleitrohr und Innenthermometer, wurden wie in Tabelle 1 angegeben ein mehrfunktioneller Alkohol oder ein Alkoholgemisch, ein Dialkylcarbonat sowie gegebenenfalls ein Katalysator (250 ppm, bezogen auf die Masse des Alkohols) vorgelegt, das Gemisch auf 140°C (in Beispiel 8 auf 115°C) erwärmt, und es wurde 6 h bei dieser Temperatur gerührt. Mit fortschreitender Reaktionsdauer reduzierte sich die Temperatur des Reaktionsgemisches, bedingt durch die einsetzende Siedekühlung des freigesetzten Monoalkohols. Anschließend wurde der Rückflusskühler gegen einen absteigenden Kühler getauscht, bezogen auf die Katalysatormenge ein Äquivalent Phosphorsäure zugegeben, der aus dem Dialkylcarbonat freigesetzte Monoalkohol abdestilliert und die Temperatur des Reaktionsgemisches langsam bis auf 180°C erhöht. Nach dem Abdestillieren des Monoalkohols wurde der Druck auf 8 mbar verringert und das Reaktionsprodukt unter leichtem Stickstoffstrom entgast.

Der abdestillierte Alkohol wurde in einem gekühlten Rundkolben gesammelt, ausgewogen und so der prozentuale Umsatz, bezogen auf den theoretisch möglichen Vollumsatz, ermittelt. Dieser ist in Tabelle 1 wiedergegeben.

Das Produktgemisch wurde anschließend mittels Gelpermeations-chromatographie analysiert. Als Laufmittel wurden Tetrahydrofuran oder Dimethylacetamid, als Standard wurde Polymethylmethacrylat (PMMA) verwendet.

**Tabelle 1: Einsatzstoffe und Endprodukte**

| Bsp. Nr. | Alkohol oder Alkoholmischung | Carbonat | Molverhältnis Alkohol : Carbonat | Katalysator | Destillat, Alkoholmenge bez. auf Vollumsatz Mol% | Molekulargewicht Produkt (g/mol) Mw Mn |
|---|---|---|---|---|---|---|
| 1 | PE + 5 EO, Octanol, 1:1 molar | DEC | 1:1 | - | 70 | 5400 2400 |
| 2 | PE +5 EO, Dodecanol, molar 0,7:0,3 | DEC | 1:1 | - | 70 | 17800 3600 |
| 3 | PE +5 EO, Dodecanol, molar 0,5:0,5 | DEC | 1:1 | K₂CO₃ | 87 | 24000 4900 |
| 4 | PE +15 EO, Cis-octadecenol, molar 0,5:0,5 | DEC | 1:1 | K₂CO₃ | 82 | 15000 4100 |
| 5 | TMP + 1,2 PO | DEC | 1:1 | K₂CO₃ | 90 | 2500 1300 |
| 6 | TMP + 12 EO | DEC | 1:1 | K₂CO₃ | 95 | 14700 5700 |
| 7 | TMP + 3 EO, Octadecanol, molar 0,8 : 0,2 | DEC | 1:1 | K₂CO₃ | 85 | 12400 3000 |
| 8 | TMP + 3 EO, Dodecanol, molar 0,6 : 0,4 | DMC | 1:1,3 | KOH / CsOH (1:1) | 85 | 39800 4300 |
| 9 | TMP + 3 EO, Octadecanol, molar 0,8 : 0,2 | DEC | 1:1 | K₂CO₃ | 90 | 43500 4200 |
| 10 | TMP + 12 EO, Octadecanol, molar 0,7 : 0,3 | DEC | 1:1 | K₂CO₃ | 90 | 43500 4200 |
| 11 | Glyc + 60 EO + 16 PO, Triethanolamin, molar 0,7 : 0,3 | DEC | 1:1 | K₂CO₃ | 30 | 15000 10200 |

| | | | | | | |
|---|---|---|---|---|---|---|
| PE = Pentaerythrit Glyc = Glycerin TMP = Trimethylolpropan EO = Ethylenoxid PO = Propylenoxid DEC = Diethylcarbonat DMC = Dimethylcarbonat | | | | | | |

### Beispiel 12

### Nachträgliche Modifikation eines hyperverzweigten Polycarbonats, vollständige Umsetzung der OH-Gruppen mit Octadecylisocyanat

In einem Vierhalskolben, ausgestattet mit Rührer, beheizbarem Tropftrichter, Gaseinleitrohr und Innenthermometer wurden 450 g des Polymers aus Beispiel 5 vorgelegt und unter Stickstoffbegasung auf 100°C erwärmt. Dann wurden 1140 g auf 50°C erwärmtes Octadecylisocyanat innerhalb 60 min zugetropft. Nach der Zugabe des Isocyanats wurde das Gemisch auf 120°C erwärmt und 7 h bei dieser Temperatur gerührt. Anschließend wurde das Produkt auf Raumtemperatur abgekühlt. Der Schmelzpunkt des Produktes lag bei 49,4°C, gemessen mittels Differential Scanning Calorimetry.

### Beispiel 13

### Nachträgliche Modifikation eines hyperverzweigten Polycarbonats, 30%ige Umsetzung der OH-Gruppen mit Octadecylisocyanat

In einem Vierhalskolben, ausgestattet mit Rührer, beheizbarem Tropftrichter, Gaseinleitrohr und Innenthermometer wurden 450 g des Polymers aus Beispiel 5 (Tabelle 1) vorgelegt und unter Stickstoffbegasung auf 100°C erwärmt. Dann wurden 342 g auf 50°C erwärmtes Octadecylisocyanat innerhalb 60 min zugetropft. Nach der Zugabe des Isocyanats wurde das Gemisch auf 120°C erwärmt und 7 h bei dieser Temperatur gerührt. Anschließend wurde das Produkt auf Raumtemperatur abgekühlt. Der Schmelzpunkt des Produktes lag bei 40,9°C, gemessen mittels Differential Scanning Calorimetry.

### Beispiel 14

### Prüfung der Eignung der hyperverzweigten Polymere als Demulgator durch Messung der Wasserabspaltung aus einer Rohölemulsion

5 g des zu prüfenden hyperverzweigten Polymers wurde in einen 100 ml Messkolben eingewogen, dieser mit Xylol / Isopropanol-Gemisch 3:1 (bez. Auf Volumen) bis zur Ringmarke aufgefüllt und das hyperverzweigte Polymer durch Schütteln darin gelöst.

Eine Rohölemulsion der Wintershall AG, Emlichheim, Sonde 87, mit einem Wassergehalt von 55 Vol.-% wurde für ca. 2 h im Wasserbad in einem nicht fest verschlossenen Behälter auf eine Temperatur von 52°C erwärmt.

Die Rohölemulsion wurde ca. 30 sec durch Schütteln homogenisiert und jeweils 100 ml der Ölemulsion wurden in 100 ml-Schüttelzylinder gefüllt. Die mit Öl gefüllten Schüttelzylinder wurden in das Wasserbad eingesetzt.

Mit einer Eppendorf - Pipette wurden jeweils 50 µl der 5 gew.-%igen Lösung des zu prüfenden Polymers in einen Schüttelzylinder mit Rohölemulsion dosiert und der Zylinder mit dem Glasstopfen verschlossen. Danach wurde der Schüttelzylinder aus dem Wasserbad heraus genommen, 60 mal geschüttelt und entspannt. Der Schüttelzylinder wurde nun wieder in das Wasserbad gestellt und der Kurzzeitmesser gestartet. Das Volumen des sich nun abscheidenden Wassers wurde nach 5, 10, 15, 30, 60, 120 und 240 min abgelesen. Die Ergebnisse sind in Tabelle 2 wiedergegeben.

**Tabelle 2**

| Polymer aus Beispiel | Wasserabspaltung in ml | | | | | | |
|---|---|---|---|---|---|---|---|
| | 5 min | 10 min | 15 min | 30 min | 60 min | 120 min | 240 min |
| 1 | 0 | 1 | 4 | 8 | 13 | 28 | 44 |
| 2 | 0 | 1 | 2 | 8 | 15 | 30 | 48 |
| 3 | 0 | 1 | 2 | 5 | 23 | 38 | 44 |
| 4 | 0 | 1 | 2 | 5 | 15 | 36 | 38 |
| 6 | 0 | 1 | 2 | 6 | 16 | 34 | 48 |
| 7 | 1 | 2 | 3 | 5 | 15 | 50 | 55 |
| 8 | 1 | 2 | 4 | 10 | 25 | 52 | 55 |
| 9 | 2 | 4 | 6 | 10 | 23 | 43 | 55 |
| 10 | 2 | 5 | 10 | 17 | 27 | 48 | 55 |
| 11 | 0 | 0 | 1 | 2 | 5 | 10 | 52 |

## Patentansprüche

1. Verwendung von nicht-dendrimeren, hochfunktionellen, hyperverzweigten Polycarbonaten, **dadurch gekennzeichnet, dass** die Polycarbonate erhältlich sind durch
a) Umsetzung mindestens eines organischen Carbonats (A) der allgemeinen Formel RO(CO)OR mit mindestens einem aliphatischen Alkohol (B), welcher mindestens drei OH-Gruppen aufweist, ausgewählt aus tri- oder höherfunktionellen Polyetherolen auf Basis tri- oder höherfunktioneller Alkohole und Ethylenoxid, Propylenoxid oder Butylenoxid, gegebenenfalls in Mischung mit einem oder mehreren difunktionellen Alkoholen (B') mit der Maßgabe, dass die mittlere OH-Funktionalität aller eingesetzten Alkohole zusammen > 2 ist, unter Eliminierung von Alkoholen ROH zu einem oder mehreren Kondensationsprodukten (K), wobei es sich bei R jeweils unabhängig voneinander um einen geradkettigen oder verzweigten aliphatischen, araliphatischen oder aromatischen Kohlenwasserstoffrest mit 1 bis 20 C-Atomen handelt, und
b) intermolekulare Umsetzung der Kondensationsprodukte (K) zu einem hochfunktionellen, hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen,
als Demulgatoren zum Spalten von Rohölemulsionen.

2. Verwendung nach Anspruch 1, **dadurch gekennzeichnet, dass** das hyperverzweigte Polycarbonat 8 bis 30 end- oder seitenständige Carbonatgruppen und/oder OH-Gruppen ausweist.

3. Verwendung nach Anspruch 1 oder 2, **dadurch gekennzeichnet, dass** der Verzweigungsgrad des hyperverzweigten Polycarbonats von 30 bis 80 % beträgt.

4. Verwendung nach einem der Ansprüche 1 bis 3, **dadurch gekennzeichnet, dass** das gewichtsmittlere Molekulargewicht der hyperverzweigten Polycarbonate 1000 bis 500.000 g/mol beträgt.

## Claims

1. The use of nondendrimeric, highly functional, hyperbranched polycarbonates obtainable by
a) reaction of at least one organic carbonate (A) of the general formula RO(CO)OR with at least one aliphatic alcohol (B) which has at least three OH groups, selected from trifunctional or higher-functional polyetherols based on trifunctional or higher-functional alcohols and ethylene oxide, propylene oxide or butylene oxide, optionally in a mixture with one or more difunctional alcohols (B'), with the proviso that the average OH functionality of all alcohols used is altogether greater than 2, with elimination of alcohols ROH to give one or more condensates (K), R, in each case independently of one another, being a straight-chain or branched aliphatic, araliphatic or aromatic hydrocarbon radical having 1 to 20 carbon atoms, and
b) intermolecular reaction of the condensates (K) to give a highly functional, hyperbranched polycarbonate,
the ratio of the OH groups to the carbonates in the reaction mixture being chosen so that the condensates (K) have on average either one carbonate group and more than one OH group or one OH group and more than one carbonate group,
as demulsifiers for breaking crude oil emulsions.

2. The use according to claim 1, wherein the hyperbranched polycarbonate has from 8 to 30 terminal or side carbonate groups and/or OH groups.

3. The use according to claim 1 or 2, wherein the degree of branching of the hyperbranched polycarbonate is from 30% to 80%.

4. The use according to any of claims 1 to 3, wherein the weight average molecular weight of the hyperbranched polycarbonates is from 1000 to 500 000 g/mol.

## Revendications

1. Utilisation de polycarbonates hyper-ramifiés, hautement fonctionnels, non dendrimères, **caractérisée en ce que** les polycarbonates peuvent être obtenus par :
a) la réaction d'au moins un carbonate organique (A) de formule générale RO(CO)OR avec au moins un alcool aliphatique (B), qui renferme au moins trois groupes OH, choisis parmi des polyétherols tri-fonctionnels ou à fonctionnalité supérieure, à base d'alcools tri-fonctionnels ou à fonctionnalité supérieure et d'oxyde d'éthylène, d'oxyde de propylène ou d'oxyde de butylène, éventuellement en mélange avec un ou plusieurs alcools di-fonctionnels (B'), à condition que la fonctionnalité OH moyenne de tous les alcools utilisés soit conjointement > 2, en éliminant des alcools ROH pour donner lieu à un ou plusieurs produits de condensation (K), où les R sont dans chaque cas, indépendamment les uns des autres, un radical hydrocarboné aliphatique, araliphatique ou aromatique, linéaire ou ramifié, renfermant de 1 à 20 atomes de carbone, et
b) la réaction intermoléculaire des produits de condensation (K) pour donner lieu à un polycarbonate hautement fonctionnel, hyper-ramifié,
où le rapport de quantités entre les groupes OH et les carbonates dans le mélange réactionnel est choisi de telle sorte que les produits de condensation (K) renferment, en moyenne, soit un groupe carbonate et plus d'un groupe OH, soit un groupe OH et plus d'un groupe carbonate,
en tant qu'agents émulsifiants pour la rupture d'émulsions d'huile brute.

2. Utilisation selon la revendication 1, **caractérisée en ce que** le polycarbonate hyper-ramifié renferme de 8 à 30 groupes carbonate et/ou groupes OH terminaux ou latéraux.

3. Utilisation selon la revendication 1 ou 2, **caractérisée en ce que** le degré de ramification du polycarbonate hyper-ramifié est de 30 à 80 %.

4. Utilisation selon l'une quelconque des revendications 1 à 3, **caractérisée en ce que** le poids moléculaire moyen en poids des polycarbonates hyper-ramifiés est de 1 000 à 500 000 g/mol.
